# EUROPEAN PATENT APPLICATION

(11) **EP 2 378 681 A1**
(43) Date of publication of application: **19.10.2011**
(21) Application number: 11156193.2
(22) Date of filing: 28.02.2011
(51) Int. Cl.: H04B 10/158

(54) **Light receiving circuit and electronic device including light receiving circuit**

(30) Priority: 19.04.2010 JP 2010096503
(71) Applicant: Kabushiki Kaisha Toshiba, Tokyo 105-8001 (JP)
(72) Inventor: Iwata, Shigeyasu, Tokyo 105-8001 (JP); Umeda, Toshiyuki, Tokyo 105-8001 (JP); Itakura, Tetsuro, Tokyo 105-8001 (JP)
(74) Representative: Henkel, Breuer & Partner

(57) **Abstract**

In one embodiment, a light receiving circuit includes: a current source circuit (2) configured to supply DC current to a light receiving element (1); a low pass filter (4) configured to cut off a signal in a signal band used: and a current sensing circuit (3) which is a same kind of device as the current source circuit (2) and configured to sense input current and control the current source circuit (2) via the low pass filter (4) based on the sensed result, the current sensing circuit (3) and the current source circuit (2) constituting a current mirror circuit.

## Description

### FIELD

Embodiments described herein relate generally to a light receiving circuit and an electronic device including the light receiving circuit.

### BACKGROUND

In general, a PD (Photodiode) used in an electronic device which receives a light signal from an infrared remote controller receives unwanted light such as sunlight in addition to a so-called infrared signal to output as DC current. Even when the DC current is output, a circuit which supplies a bias voltage to the PD needs to supply a normal bias voltage to the PD so that a signal input from the PD is sent to a TIA (Trans Impedance Amplifier) without deteriorating the input signal. For this reason, the circuit which supplies the bias voltage to the PD needs to supply the DC current at a high-output impedance and over a wide dynamic range.

As one of conventional systems, a configuration in which only a load resistance is simply connected between a power source and a cathode terminal of the PD is known.

However, in the case of the configuration in which only the load resistance is simply connected between the power source and the cathode terminal of the PD, a value of the load resistance needs to be about 1 MΩ, and if the DC current of 10 uA flows into the load resistance, a 10-volt drop occurs and therefore, the normal bias voltage cannot be supplied to the PD. In the configuration, a bias voltage is supplied by using an element whose variation in characteristic is large such as the load resistance, and thereby, there are a degradation in the characteristic due to the variation in the element, a degradation of an output impedance due to the variation in the element, and the normal bias voltage for the PD being not be able to be supplied.

### SUMMARY

To overcome the problems and achieve the object mentioned above, according to an embodiment, a light receiving circuit comprises a current source circuit, a low pass filter, and a current sensing circuit. The current source circuit is configured to supply DC current to a light receiving element. The low pass filter is configured to cut off a signal in a signal band used. The current sensing circuit is a same kind of device as the current source circuit and is configured to sense input current and control the current source circuit via the low pass filter based on the sensed result. The current sensing circuit and the current source circuit constitute a current mirror circuit.

According to another embodiment of the invention, a light receiving circuit comprises a current source circuit, a current sensing circuit, and a low pass filter. The current source circuit is configured to supply DC current to a light receiving element. The current sensing circuit is a same kind of device as the current source circuit and is configured to sense input current and control the current source circuit based on the sensed result. The current sensing circuit and the current source circuit constitute a current mirror circuit. The low pass filter is arranged in series between the current sensing circuit and the light receiving element and is configured to cut off a signal in a signal band used.

According to still another embodiment of the invention, an electronic device comprises a light receiving circuit, a light receiving element, and a controller. The controller is configured to perform a predetermined control in response to a signal received by the light receiving element.

### BRIEF DESCRIPTION OF THE SEVERAL VIEWS OF THE DRAWINGS

In one embodiment, a light receiving circuit will now be explained in detail with reference to the drawings.

FIG. 1A is an exemplary block diagram of a light receiving circuit according to a first embodiment;
FIG. 1B is an exemplary block diagram of a first modified light receiving circuit according to the first embodiment;
FIG. 1C is an exemplary block diagram of a second modified light receiving circuit according to the first embodiment;
FIG. 1D is an exemplary block diagram of a third modified light receiving circuit according to the first embodiment;
FIG. 2A is an exemplary block diagram of a first light receiving circuit of an exemplary circuit implementation 1-1 according to the first embodiment;
FIG. 2B is an exemplary block diagram of a first modified light receiving circuit of the exemplary circuit implementation 1-1 according to the first embodiment;
FIG. 3A is an exemplary block diagram of a second light receiving circuit of an exemplary circuit implementation 1-2 according to the first embodiment;
FIG. 3B is an exemplary block diagram of a second modified light receiving circuit of the exemplary circuit implementation 1-2 according to the first embodiment;
FIG. 4A is an exemplary block diagram of a third light receiving circuit of an exemplary circuit implementation 1-3 according to the first embodiment;
FIG. 4B is an exemplary block diagram of a third modified light receiving circuit of the exemplary circuit implementation 1-3 according to the first embodiment;
FIG. 5A is an exemplary block diagram of a fourth light receiving circuit of an exemplary circuit implementation 1-4 according to the first embodiment;
FIG. 5B is an exemplary block diagram of a fourth modified light receiving circuit of the exemplary circuit implementation 1-4 according to the first embodiment;
FIG. 6A is an exemplary block diagram of a light receiving circuit according to a second embodiment;
FIG. 6B is an exemplary block diagram of a first modified light receiving circuit according to the second embodiment;
FIG. 6C is an exemplary block diagram of a second modified light receiving circuit according to the second embodiment;
FIG. 6D is an exemplary block diagram of a third modified light receiving circuit according to the second embodiment;
FIG. 6E is an exemplary block diagram of a fourth modified light receiving circuit according to the second embodiment;
FIG. 6F is an exemplary block diagram of a fifth modified light receiving circuit according to the second embodiment;
FIG. 7A is an exemplary block diagram of a first light receiving circuit of an exemplary circuit implementation 2-1 according to the second embodiment;
FIG. 7B is an exemplary block diagram of a first modified light receiving circuit of the exemplary circuit implementation 2-1 according to the second embodiment;
FIG. 8A is an exemplary block diagram of a second light receiving circuit of an exemplary circuit implementation 2-2 according to the second embodiment;
FIG. 8B is an exemplary block diagram of a second modified light receiving circuit of the exemplary circuit implementation 2-2 according to the second embodiment;
FIG. 9A is an exemplary block diagram of a third light receiving circuit of an exemplary circuit implementation 2-3 according to the second embodiment;
FIG. 9B is an exemplary block diagram of a third modified light receiving circuit of the exemplary circuit implementation 2-3 according to the second embodiment;
FIG. 10 is an exemplary graph illustrating examples of the characteristics of bias voltages of PDs when light is input to PDs in the circuits in the above mentioned embodiments and in a conventional circuit;
FIG. 11 is an exemplary schematic view of a television receiver and a remote controller to operate the television receiver according to a third embodiment; and
FIG. 12 is an exemplary block diagram of a main signal processing system of the television receiver in the third embodiment.

### DETAILED DESCRIPTION

Various embodiments will be described hereinafter with reference to the accompanying drawings.

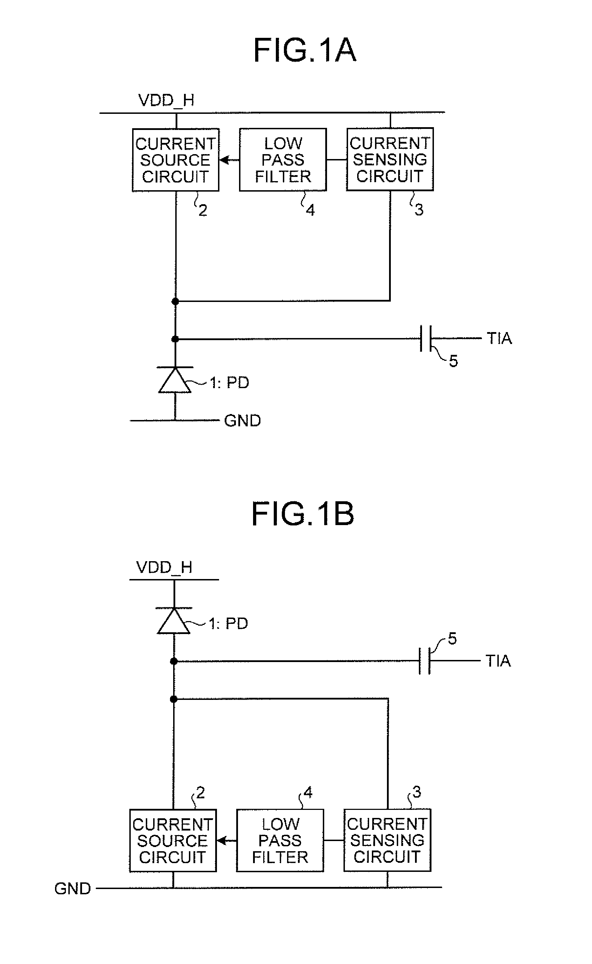

First, a light receiving circuit according to a first embodiment will be explained below. FIG. 1A is an exemplary block diagram of a light receiving circuit according to the first embodiment.

A cathode terminal of a PD (Photodiode) 1 as a light receiving element is connected to a current source circuit 2, a current sensing circuit 3, and a capacitor 5 of an input section of a TIA (Trans Impedance Amplifier). An anode terminal of the PD 1 is grounded (connected to the ground). A low pass filter 4 is a filter that attenuates signals in a signal band (for example, 38 kHz) used in an infrared remote controller (for example, a cutoff frequency is 30 kHz). The current sensing circuit 3 is connected to the current source circuit 2 via the low pass filter 4. The current source circuit 2 and the current sensing circuit 3 are the same kind of devices, and constitute a current mirror circuit.

When signal from the infrared remote controller and noise light such as sunlight are input to the PD 1 at the same time, signal current and DC current are output from the PD 1 at the same time. The current sensing circuit 3 senses the value of the DC current. The current sensing circuit 3 controls the current source circuit 2 via the low pass filter 4 based on the sensed result to supply DC current needed for the PD 1. Because the signal current is not passed through the low pass filter 4, current corresponding to the signal current is not output from the current source circuit 2. Thus, the signal current is transmitted to the capacitor 5 of the input section of the TIA.

FIG. 1B is an exemplary block diagram of a first modified light receiving circuit according to the first embodiment. Compared to the light receiving circuit illustrated in FIG. 1A, in the first modified light receiving circuit, a first group of the current source circuit 2, the current sensing circuit 3 and the low pass filter 4 and a second group of the PD 1 and the capacitor 5 of the input section of the TIA are turned upside down with respect to a power source and the ground. Except for this point, the first modified light receiving circuit has the same functions as those of the light receiving circuit illustrated in FIG. 1A.

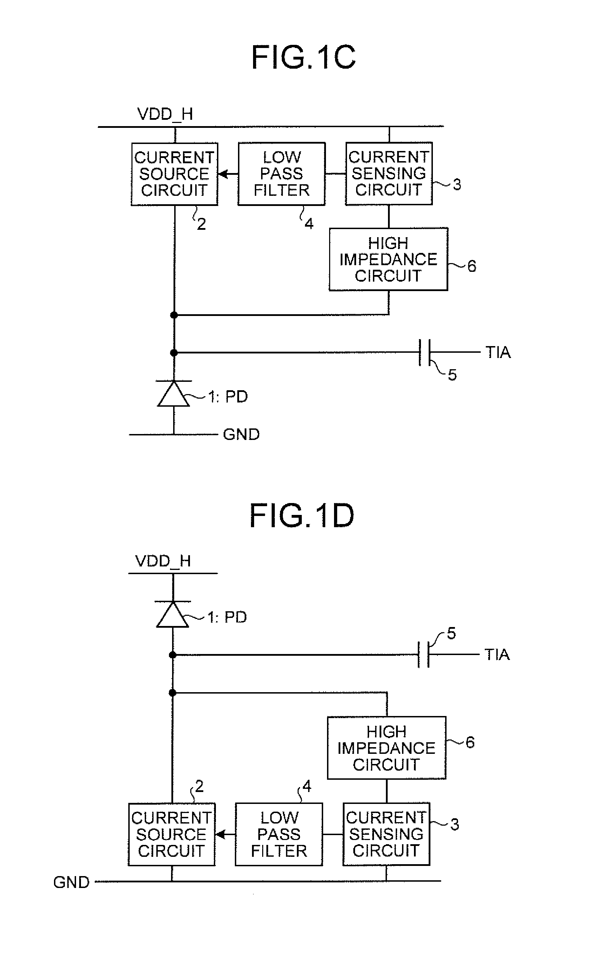

FIG. 1C is an exemplary block diagram of a second modified light receiving circuit according to the first embodiment. FIG. 1D is an exemplary block diagram of a third modified light receiving circuit according to the first embodiment. Differently from the light receiving circuit illustrated in FIG. 1A, in the second modified light receiving circuit illustrated in FIG. 1C, a high impedance circuit 6 is connected in series between the current sensing circuit 3 and the PD 1. Differently from the light receiving circuit illustrated in FIG. 1B, in the third modified light receiving circuit illustrated in FIG. 1D, the high impedance circuit 6 is connected in series between the current sensing circuit 3 and the PD 1. Because of the configuration, it is possible to increase an output impedance on a side of the current sensing circuit 3 as viewed from the PD 1 and suppress degradation of the output impedance.

According to the light receiving circuits illustrated in FIGS. 1A to 1D, it is possible to realize an light receiving circuit in which an influence of noise light such as sunlight is eliminated as much as possible and degradation of the signal from the infrared remote controller is prevented.

Next, a plurality of exemplary circuit implementations of the light receiving circuit according to the first embodiment are explained below.

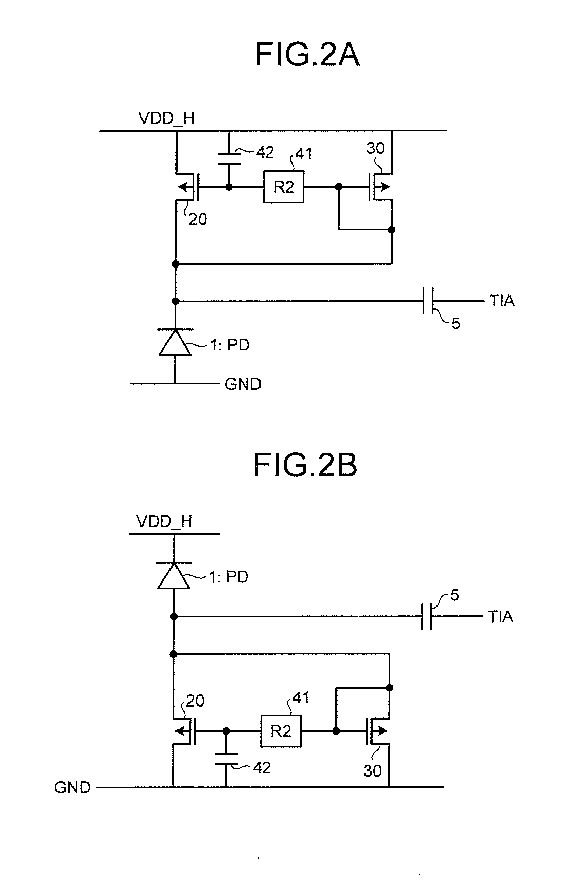

FIG. 2A is an exemplary block diagram of a first light receiving circuit of an exemplary circuit implementation 1-1 according to the first embodiment. In the first light receiving circuit, the current source circuit 2 includes a P channel type MOSFET (Metal Oxide Semiconductor Field Effect Transistor) 20 (hereinafter referred to as FET 20), and the current sensing circuit 3 includes the same kind of a P channel type MOSFET 30 (hereinafter referred to as FET 30) as the FET 20. The low pass filter 4 is a RC low pass filter including a resistance element R2 41 and a capacitor 42. In the first light receiving circuit, connection relations of the FET 20, the FET 30, the R2 41, and the capacitor 42 are explained below.

The drain terminal of the FET 20 is connected to the cathode terminal of the PD 1, the source terminal of the FET 20 is connected to a power source VDD_H, and the gate terminal of the FET 20 is connected to one end of the R2 41 and one end of the capacitor 42. The other end of the capacitor 42 is connected to the power source VDD_H. On the other hand, the drain terminal of the FET 30 is connected to the cathode terminal of the PD 1 and the gate terminal of the FET 30. The gate terminal of the FET 30 is further connected to the other end of the R2 41. The source terminal of the FET 30 is connected to the power source VDD_H.

In the first light receiving circuit, the RC low pass filter (41, 42) as the low pass filter 4 that attenuates the signals in the signal band used in the infrared remote controller is arranged between the gate terminal of the FET 30 as the current sensing circuit 3 and the gate terminal of the FET 20 as the current source circuit 2. The DC current is passed through the RC low pass filter (41, 42) via the drain terminal and the gate terminal of the FET 30, but because the signals in the signal band used in the infrared remote controller is cut off, the signal current does not cause the FET 20 to turn on. The FET 30 as the current sensing circuit 3 senses the value of the DC current from the PD 1, and controls the FET 20 as the current source circuit 2 based on the sensed result to supply the DC current needed for the PD 1.

Specifically, when noise light such as sunlight is input to the PD 1, current is passed through the PD 1, and thereby current is also passed through the FET 30. Thus, the FET 30 as the current sensing circuit 3 is turned on. At this time, the RC low pass filter (41, 42) performs filtering to cut off the signals in the frequency band used in the remote controller. When the FET 30 is turned on, current proportional to current that is passed through the FET 30 is passed through the FET 20 because the FET 20 and the FET 30 constitute the current mirror circuit. Thus, when the FET 30 as the current sensing circuit 3 senses DC current, thereby the FET 20 as the current source circuit 2 is turned on, and the current source circuit 2 begins to supply DC current.

In the first light receiving circuit, because the signal current is not passed through the RC low pass filter (41, 42), current corresponding to the signal current is not supplied from the current source circuit 2 to the PD 1. Thus, the signal current is transmitted to the capacitor 5 of the input section of the TIA.

FIG. 2B is an exemplary block diagram of a first modified light receiving circuit of the exemplary circuit implementation 1-1 according to the first embodiment. Compared to the first light receiving circuit illustrated in FIG. 2A, in the first modified light receiving circuit, a first group of the FET 20 as the current source circuit 2, the FET 30 as the current sensing circuit 3 and the RC low pass filter (41, 42) as the low pass filter 4 and a second group of the PD 1 and the capacitor 5 of the input section of the TIA are turned upside down with respect to the power source and the ground. Further, a connecting direction of the first modified light receiving circuit including the FET 20, the FET 30 and the RC low pass filter (41, 42) with respect to the power source and the ground is opposed to that of the first light receiving circuit illustrated in FIG. 2A. Except for these points, the first modified light receiving circuit has the same functions as those of the first light receiving circuit illustrated in FIG. 2A.

In the light receiving circuit illustrated in FIG. 2A and the first modified light receiving circuit illustrated in FIG. 2B, a load resistance is not used, and the current sensing transistor30, the RC low pass filter (41, 42), and the same kind of the current source transistor 20 as the current sensing transistor 30 constitute the light receiving circuit. For this reason, it is possible to exclude an influence due to dispersion of elements as much as possible. Also, because a load resistance is not used, it is possible to avoid a drop in voltage due to the load resistance.

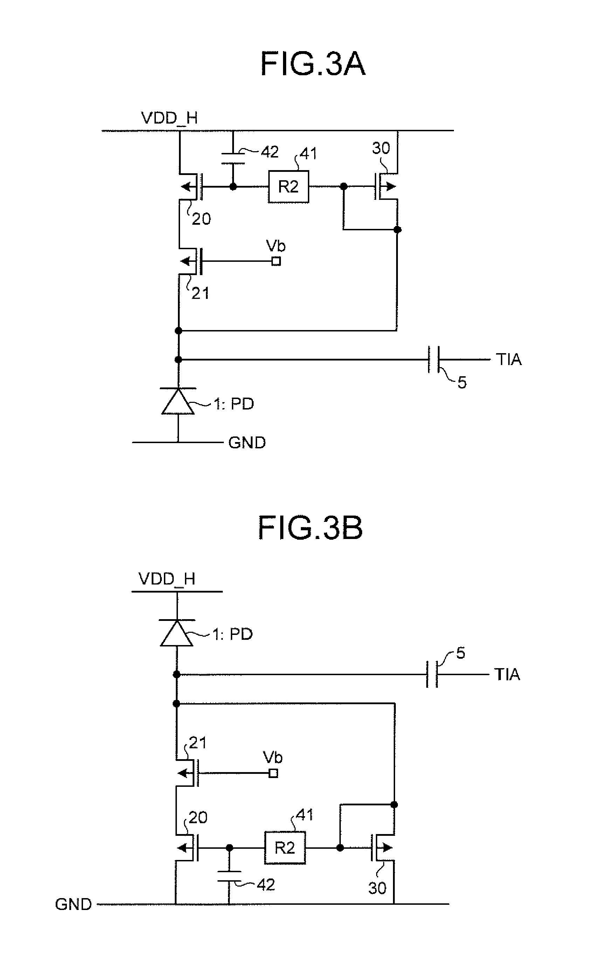

FIG. 3A is an exemplary block diagram of a second light receiving circuit of an exemplary circuit implementation 1-2 according to the first embodiment. The second light receiving circuit is different from the first light receiving circuit illustrated in FIG. 2A in that as the current source circuit 2, a FET 21 of a P channel type MOSFET as a third transistor is further connected in series between the PD 1 and the FET 20, and the FET 21 is connected in cascade to the FET 20. A gate bias voltage Vb is applied to the FET 21. In the second light receiving circuit, an output impedance of the FET 21 is added to the output impedance of the FET 20, and thereby it is possible to further increase an output impedance on a side of the current source circuit 2 as viewed from the PD 1 and suppress degradation of the output impedance. Also, because a load resistance is not used, it is possible to avoid a drop in voltage due to the load resistance.

FIG. 3B is an exemplary block diagram of a second modified light receiving circuit of the exemplary circuit implementation 1-2 according to the first embodiment. Compared to the second light receiving circuit illustrated in FIG. 3A, in the second modified light receiving circuit, a first group of the FET 20 and the FET 21 as the current source circuit 2, the FET 30 as the current sensing circuit 3 and the RC low pass filter (41, 42) as the low pass filter 4 and a second group of the PD 1 and the capacitor 5 of the input section of the TIA are turned upside down with respect to the power source and the ground. Further, a connecting direction of the second modified light receiving circuit including the FET 20, the FET 21, the FET 30 and the RC low pass filter (41, 42) with respect to the power source and the ground is opposed to that of the second light receiving circuit illustrated in FIG. 3A. Except for these points, the second modified light receiving circuit has the same functions and effects as those of the second light receiving circuit illustrated in FIG. 3A.

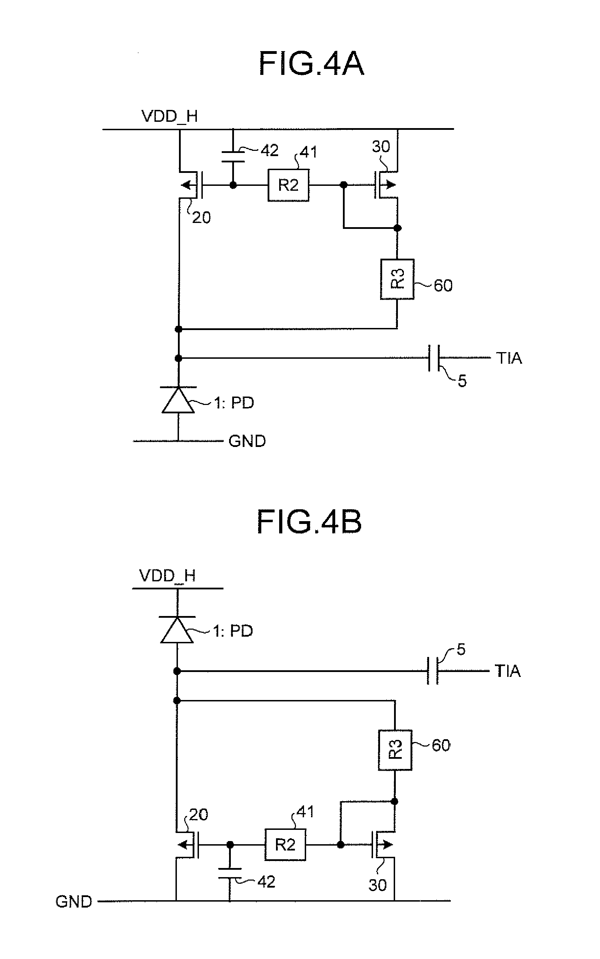

FIG. 4A is an exemplary block diagram of a third light receiving circuit of an exemplary circuit implementation 1-3 according to the first embodiment. The third light receiving circuit is different from the first light receiving circuit illustrated in FIG. 2A in that a resistance element R3 60 is further connected in series between the PD 1 and the FET 30, and although it is not illustrated in FIG. 4A, a size of the FET 20 as the current source circuit 2 is n times (where n is an integer of 2 or more) larger than a size of the FET 30 as the current sensing circuit 3. In the present specification, the size means the number of FETs when the FETs are connected in parallel, or an aspect ratio W/L. In the exemplary circuit implementation 1-3 (and also an exemplary circuit implementation 1-4 and exemplary circuit implementations 2-2 and 2-3 according to a second embodiment described later), it is preferable that the size of the FET 20 is set so that current that is passed through the resistance element R3 60 is reduced to such a degree that a dispersion in characteristics of the resistance elements R3 60 is negligible (for example, it is preferable to set n to be at least larger than 2).

FIG. 4B is an exemplary block diagram of a third modified light receiving circuit of the exemplary circuit implementation 1-3 according to the first embodiment. Compared to the third light receiving circuit illustrated in FIG. 4A, in the third modified light receiving circuit, a first group of the FET 20 as the current source circuit 2, the FET 30 as the current sensing circuit 3, the RC low pass filter (41, 42) as the low pass filter 4 and the resistance element R3 60 and a second group of the PD 1 and the capacitor 5 of the input section of the TIA are turned upside down with respect to the power source and the ground. Further, a connecting direction of the third modified light receiving circuit including the FET 20, the FET 30, the RC low pass filter (41, 42), and the resistance elements R3 60 with respect to the power source and the ground is opposed to that of the third light receiving circuit illustrated in FIG. 4A. Except for these points, the third modified light receiving circuit has the same functions and effects as those of the third light receiving circuit illustrated in FIG. 4A.

In the third light receiving circuit illustrated in FIG. 4A and the third modified light receiving circuit illustrated in FIG. 4B, an impedance of the resistance elements R3 60 is added on the side of the current sensing circuit 3, and thereby, it is possible to increase the output impedance on the side of the current sensing circuit 3 as viewed from the PD 1 and suppress the degradation of the output impedance. On the other hand, because a size of the FET 20 as the current source circuit 2 is n times (where n is an integer of 2 or more) larger than a size of the FET 30 as the current sensing circuit 3, current to flow to the FET 30 side is 1/n, and the current that is passed through the resistance element R3 60 is very small. Therefore, although the resistance element R3 is used, an influence such as a dispersion in elements due to using the resistance element R3 60 is substantially negligible.

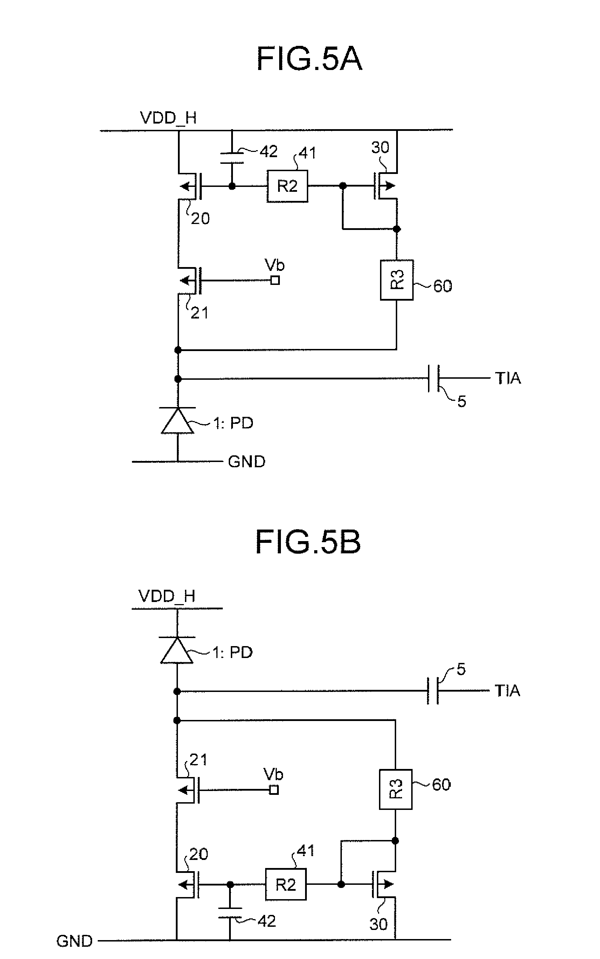

FIG. 5A is an exemplary block diagram of a fourth light receiving circuit of the exemplary circuit implementation 1-4 according to the first embodiment,. The fourth light receiving circuit is different from the second light receiving circuit illustrated in FIG. 3A in that the resistance element R3 60 is further connected in series between the PD 1 and the FET 30, and although it is not illustrated in FIG. 5A, a size of the FET 20 as the current source circuit 2 is n times (where n is an integer of 2 or more) larger than a size of the FET 30 as the current sensing circuit 3. In the fourth light receiving circuit, the impedance of the resistance elements R3 60 is added on the side of the current sensing circuit 3, and thereby, it is possible to increase the output impedance on the side of the current sensing circuit 3 as viewed from the PD 1 and suppress the degradation of the output impedance. Like the exemplary circuit implementation 1-3, in the fourth light receiving circuit, although the resistance element R3 is used, the current that is passed through the resistance element R3 60 is very small, and thereby, the influence such as the dispersion in elements due to using the resistance element R3 60 is substantially negligible.

FIG. 5B is an exemplary block diagram of a fourth modified light receiving circuit of the exemplary circuit implementation 1-4 according to the first embodiment. Compared to the fourth light receiving circuit illustrated in FIG. 5A, in the fourth modified light receiving circuit, a first group of the FET 20 and the FET 21 as the current source circuit 2, the FET 30 as the current sensing circuit 3, the RC low pass filter (41, 42) as the low pass filter 4 and the resistance element R3 60 and a second group of the PD 1 and the capacitor 5 of the input section of the TIA are turned upside down with respect to the power source and the ground. Further, a connecting direction of the fourth modified light receiving circuit including the FET 20, the FET 21, the FET 30, the RC low pass filter (41, 42), and the resistance elements R3 60 with respect to the power source and the ground is opposed to that of the fourth light receiving circuit illustrated in FIG. 5A. Except for these points, the fourth modified light receiving circuit has the same functions and effects as those of the fourth light receiving circuit illustrated in FIG. 5A.

### (Second embodiment)

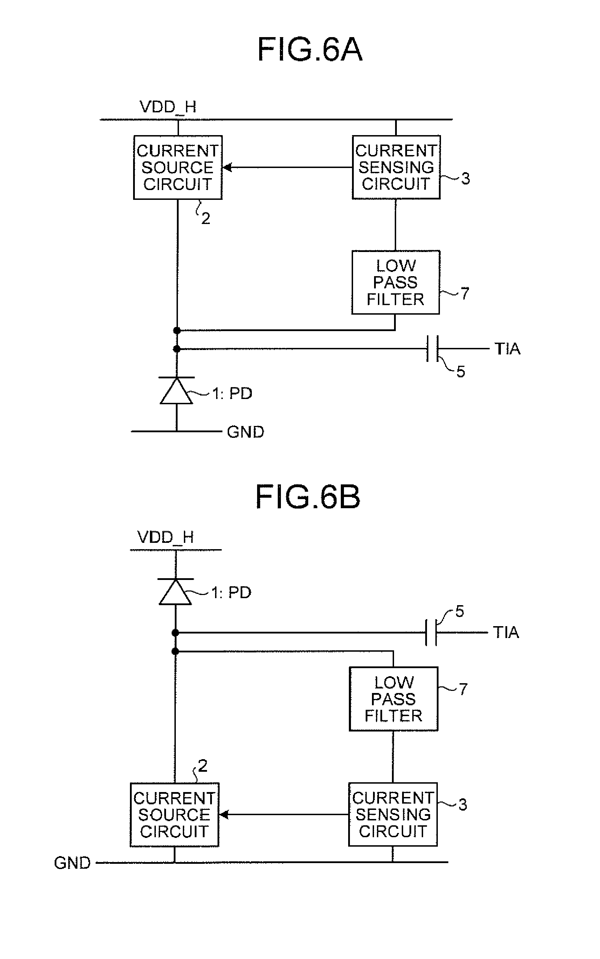

Next, a light receiving circuit according to a second embodiment will be explained below. FIG. 6A is an exemplary block diagram of a light receiving circuit according to a second embodiment.

The cathode terminal of the PD 1 as the light receiving element is connected to the current source circuit 2, a low pass filter 7 that attenuates signals in the signal band used in the infrared remote controller, and the capacitor 5 of the input section of the TIA. The anode terminal of the PD 1 is grounded (connected to a ground). The low pass filter 7 is a filter that attenuates signals in a signal band (for example, 38 kHz) used in an infrared remote controller (for example, a cutoff frequency is 30 kHz), and is also connected to the current sensing circuit 3. The current sensing circuit 3 is also connected to the current source circuit 2, and constitutes the current mirror circuit with the current source circuit 2.

When the signal from the infrared remote controller and noise light such as sunlight are input to the PD 1 at the same time, the signal current and the DC current are output from the PD 1 at the same time. The DC current from the PD 1 is passed through the low pass filter 7, and then the value of the DC current is sensed by the current sensing circuit 3. The current sensing circuit 3 controls the current source circuit 2 based on the sensed result to supply DC current needed for the PD 1. On the other hand, because the signal current from the PD 1 is not passed through the low pass filter 7, the current corresponding to the signal current is not output from the current source circuit 2. Thus, the signal current is transmitted to the capacitor 5 of the input section of the TIA.

FIG. 6B is an exemplary block diagram of a first modified light receiving circuit according to the second embodiment. Compared to the light receiving circuit illustrated in FIG. 6A, in the first modified light receiving circuit, a first group of the current source circuit 2, the current sensing circuit 3 and the low pass filter 7 and a second group of the PD 1 and the capacitor 5 of the input section of the TIA are turned upside down with respect to a power source and the ground. Except for this point, the first modified light receiving circuit has the same functions as those of the light receiving circuit illustrated in FIG. 6A.

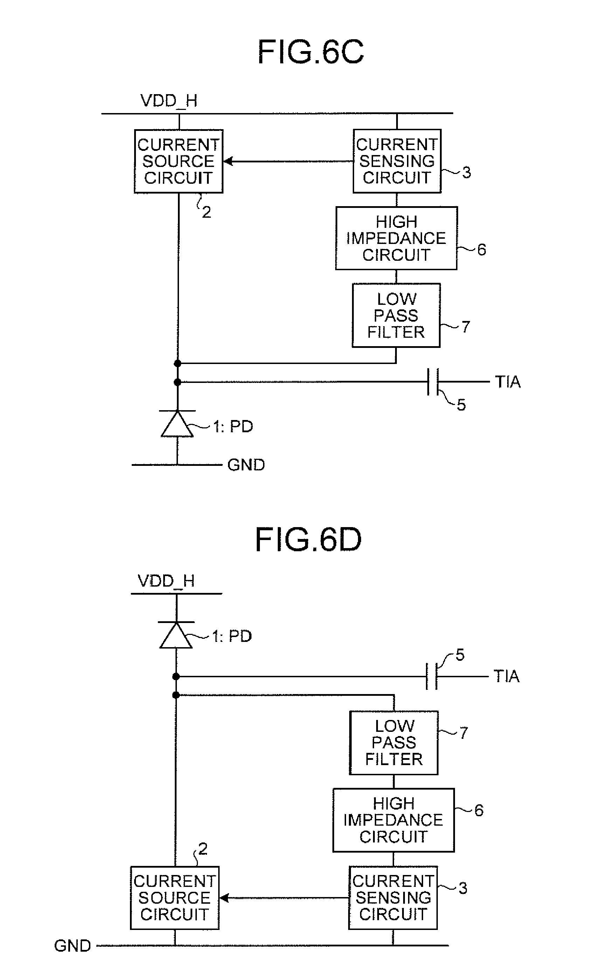

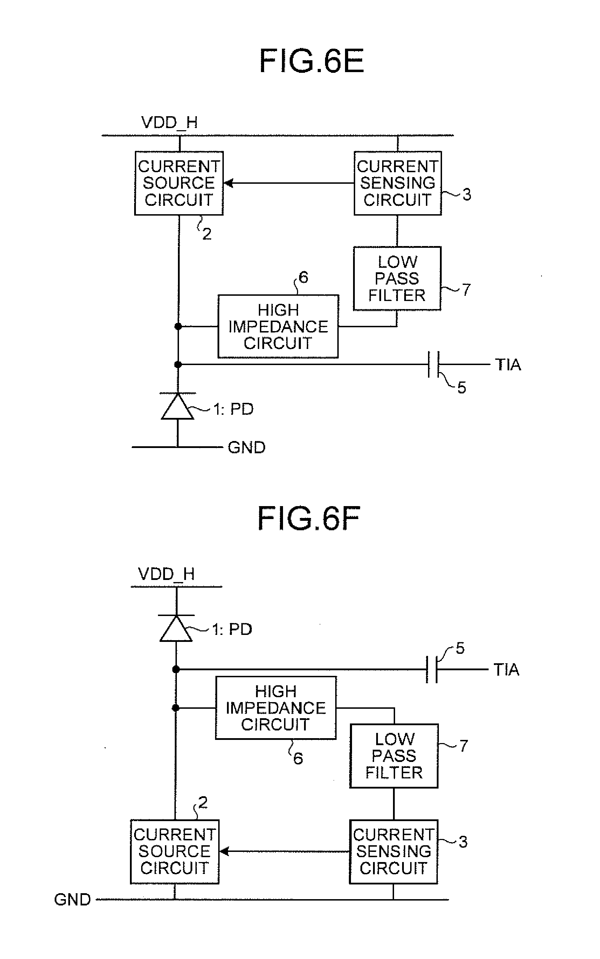

FIG. 6C is an exemplary block diagram of a second modified light receiving circuit according to the second embodiment. FIG. 6D is an exemplary block diagram of a third modified light receiving circuit according to the second embodiment. FIG. 6E is an exemplary block diagram of a fourth modified light receiving circuit according to the second embodiment. FIG. 6F is an exemplary block diagram of a fifth modified light receiving circuit according to the second embodiment. Differently from the light receiving circuit illustrated in FIG. 6A, in the second modified light receiving circuit illustrated in FIG. 6C, the high impedance circuit 6 is connected in series between the current sensing circuit 3 and the low pass filter 7. Differently from the light receiving circuit illustrated in FIG. 6B, in the third modified light receiving circuit illustrated in FIG. 6D, the high impedance circuit 6 is connected in series between the current sensing circuit 3 and the low pass filter 7. Differently from the light receiving circuit illustrated in FIG. 6A, in the fourth modified light receiving circuit illustrated in FIG. 6E, the high impedance circuit 6 is connected in series between the PD 1 and the low pass filter 7. Differently from the light receiving circuit illustrated in FIG. 6B, in the fifth modified light receiving circuit illustrated in FIG. 6F, the high impedance circuit 6 is connected in series between the PD 1 and the low pass filter 7. Because of the configuration, it is possible to increase an output impedance on a side of the current sensing circuit 3 as viewed from the PD 1 and suppress degradation of the output impedance.

Like the first embodiment, according to the light receiving circuits illustrated in FIGS. 6A to 6D, it is possible to realize an light receiving circuit in which an influence of noise light such as sunlight is eliminated as much as possible and degradation of the signal from the infrared remote controller is prevented.

Next, a plurality of exemplary circuit implementations of the light receiving circuit according to the second embodiment are explained below.

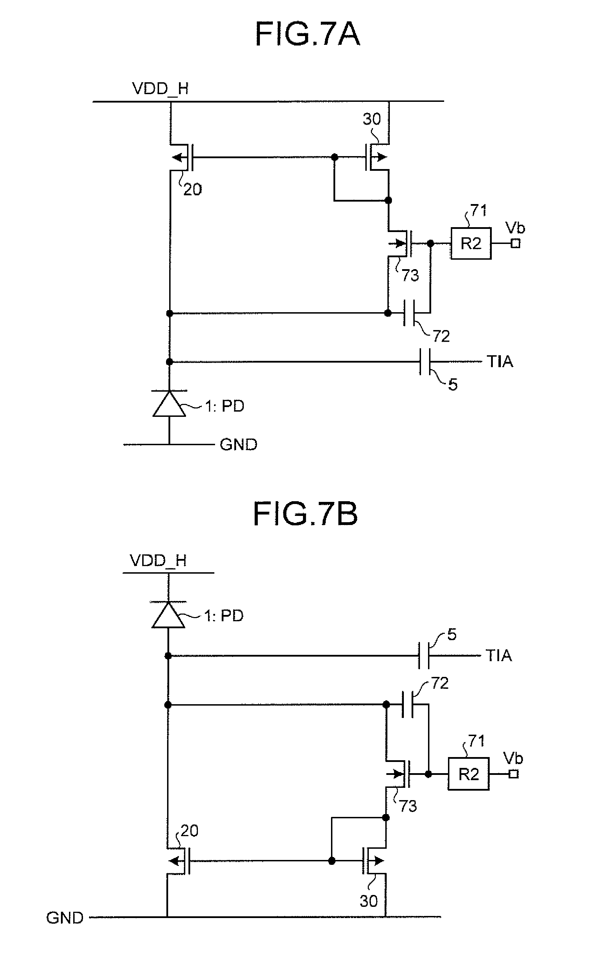

FIG. 7A is an exemplary block diagram of a first light receiving circuit of an exemplary circuit implementation 2-1 according to the second embodiment. In the first light receiving circuit, the current source circuit 2 includes the P channel type MOSFET 20 (the FET 20), and the current sensing circuit 3 includes the same kind of the P channel type MOSFET 30 (the FET 30) as the FET 20. The low pass filter 7 is a RC low pass filter including a resistance element R2 71, a capacitor 72, and an N channel type MOSFET 73 (hereinafter referred to as FET 73). In the first light receiving circuit, connection relations of the FET 20, the FET 30, the R2 71, the capacitor 72, and the FET 73 are explained below.

The drain terminal of the FET 20 is connected to the cathode terminal of the PD 1, the source terminal of the FET 20 is connected to the power source VDD_H, and the gate terminal of the FET 20 is connected to the gate terminal of the FET 30 and the source terminal of the FET 73. On the other hand, the drain terminal of the FET 30 is connected to the source terminal of the FET 73 and the source terminal of the FET 30 is connected to the power source VDD_H. The gate terminal of the FET 73 is connected to one end of the R2 71 and one end of the capacitor 72, and the drain terminal of the FET 73 is connected to the other end of the capacitor 72 and the cathode terminal of the PD 1. A gate bias voltage Vb for the FET 73 is applied to the other end of the R2 71.

In the first light receiving circuit, the low pass filter 7 includes the FET 73 that constitutes a cascode circuit with the FET 30, and the RC low pass filter (71, 72) that attenuates the signals in the signal band and that is arranged between the gate terminal and the source terminal of the FET 73. The DC current from the PD 1 is passed through the low pass filter 7, and then the value of the DC current is sensed by the FET 30 as the current sensing circuit 3. The FET 30 controls the FET 20 as the current source circuit 2 based on the sensed result to supply DC current needed for the PD 1. In this case, concrete operations of the FET 20 and the FET 30 are the same as those of the first embodiment. On the other hand, because the signal current is not passed through the low pass filter 7, the current corresponding to the signal current is not output from the FET 20 as the current source circuit 2. Thus, the signal current is transmitted to the capacitor 5 of the input section of the TIA.

FIG. 7B is an exemplary block diagram of a first modified light receiving circuit of the exemplary circuit implementation 2-1 according to the second embodiment. Compared to the first light receiving circuit illustrated in FIG. 7A, in the first modified light receiving circuit, a first group of the FET 20 as the current source circuit 2, the FET 30 as the current sensing circuit 3 and the RC low pass filter (71, 72) and the FET 73 as the low pass filter 7 and a second group of the PD 1 and the capacitor 5 of the input section of the TIA are turned upside down with respect to the power source and the ground. Further, a connecting direction of the first modified light receiving circuit including the FET 20, the FET 30, the RC low pass filter (71, 72) and the FET 73 with respect to the power source and the ground is opposed to that of the first light receiving circuit illustrated in FIG. 7A. Except for these points, the first modified light receiving circuit has the same functions as those of the first light receiving circuit illustrated in FIG. 7A.

In the light receiving circuit illustrated in FIG. 7A and the first modified light receiving circuit illustrated in FIG. 7B, a load resistance is not used, and the current sensing transistor 30, the RC low pass filter (71, 72), the FET 73, and the same kind of the current source transistor 20 as the current sensing transistor 30 constitute the light receiving circuit. For this reason, regarding supplying the bias voltage, it is possible to exclude an influence due to dispersion of elements as much as possible. Also, because a load resistance is not used, it is possible to avoid a drop in voltage due to the load resistance. It is possible to realize a light receiving circuit that supplies the DC current needed for the PD 1 and prevents degradation of signal, while the bias voltage for the PD 1 is supplied stably because the bias voltage applied to the PD 1 is obtained by subtracting only a voltage dropped between the gate terminal and the source terminal of the FET 73 from Vb.

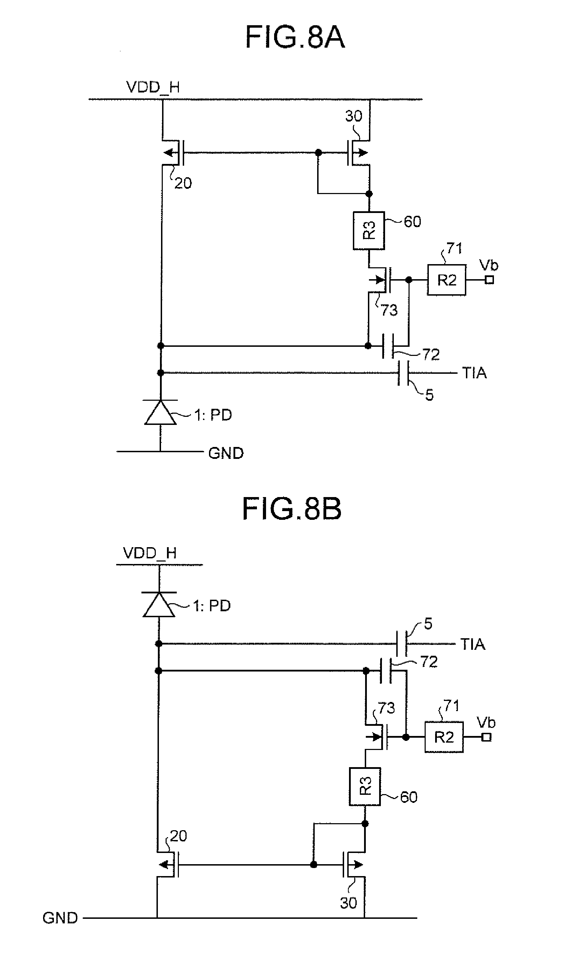

FIG. 8A is an exemplary block diagram of a second light receiving circuit of the exemplary circuit implementation 2-2 according to the second embodiment. The second light receiving circuit is different from the first light receiving circuit illustrated in FIG. 7A in that the resistance element R3 60 is connected in series between the FET 73 and the FET 30 as the current sensing circuit 3. Specifically, one end of the resistance element R3 60 is connected to the source terminal of the FET 73, and the other end of the resistance element R3 60 is connected to the drain terminal and the gate terminal of the FET 30. Another difference between the second light receiving circuit and the first light receiving circuit illustrated in FIG. 7A is in that although it is not illustrated in FIG. 8A, a size of the FET 20 as the current source circuit 2 is n times (where n is an integer of 2 or more) larger than a size of the FET 30 as the current sensing circuit 3.

In the second light receiving circuit, the impedance of the resistance elements R3 60 is added on the side of the current sensing circuit 3, and thereby, it is possible to increase the output impedance on the side of the current sensing circuit 3 as viewed from the PD 1 and suppress the degradation of the output impedance. Like the exemplary circuit implementation 1-3, in the second light receiving circuit, although the resistance element R3 is used, the current that is passed through the resistance element R3 60 is very small, and thereby, the influence such as the dispersion in elements due to using the resistance element R3 60 is substantially negligible.

FIG. 8B is an exemplary block diagram of a second modified light receiving circuit of the exemplary circuit implementation 2-2 according to the second embodiment. Compared to the second light receiving circuit illustrated in FIG. 8A, in the second modified light receiving circuit, a first group of the FET 20 as the current source circuit 2, the FET 30 as the current sensing circuit 3, the RC low pass filter (71, 72) and the FET 73 as the low pass filter 7, and the resistance element R3 60 and a second group of the PD 1 and the capacitor 5 of the input section of the TIA are turned upside down with respect to the power source and the ground. Further, a connecting direction of the second modified light receiving circuit including the FET 20, the FET 30, the RC low pass filter (71, 72), the FET 73, and the resistance elements R3 60 with respect to the power source and the ground is opposed to that of the second light receiving circuit illustrated in FIG. 8A. Except for these points, the second modified light receiving circuit has the same functions and effects as those of the second light receiving circuit illustrated in FIG. 8A.

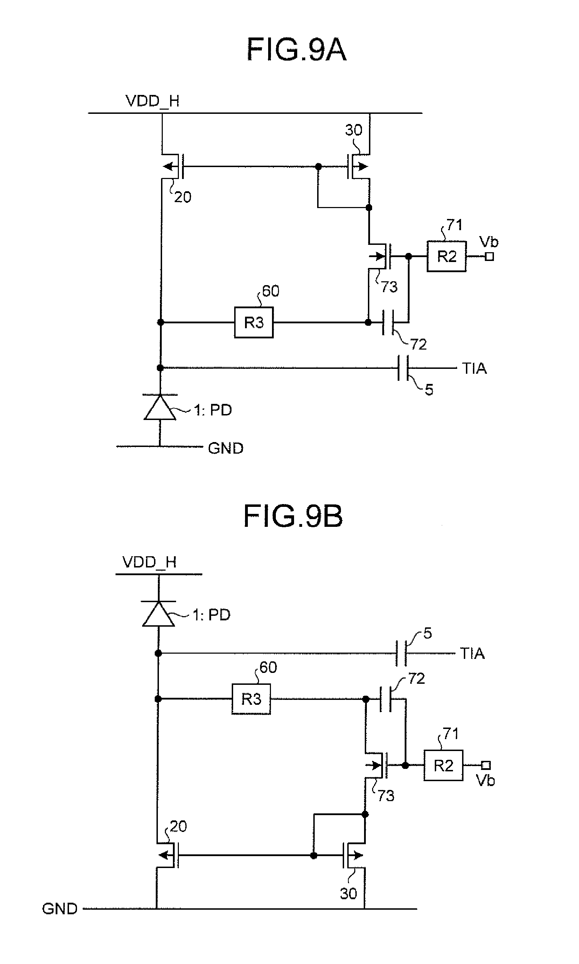

FIG. 9A is an exemplary block diagram of a third light receiving circuit of the exemplary circuit implementation 2-3 according to the second embodiment. The third light receiving circuit is different from the first light receiving circuit illustrated in FIG. 7A in that the resistance element R3 60 is connected in series between the drain terminal of the FET 73 and one end of the capacitor 72, and the cathode terminal of the PD 1, and although it is not illustrated in FIG. 9A, a size of the FET 20 as the current source circuit 2 is n times (where n is an integer of 2 or more) larger than a size of the FET 30 as the current sensing circuit 3.

Also in the third light receiving circuit, because the impedance of the resistance elements R3 60 is added on the side of the current sensing circuit 3, it is possible to increase the output impedance on the side of the current sensing circuit 3 as viewed from the PD 1 and suppress the degradation of the output impedance. Also, although the resistance element R3 is used, the current that is passed through the resistance element R3 60 is very small, and thereby, the influence such as the dispersion in elements due to using the resistance element R3 60 is substantially negligible.

FIG. 9B is an exemplary block diagram of a third modified light receiving circuit of the exemplary circuit implementation 2-3 according to the second embodiment. Compared to the third light receiving circuit illustrated in FIG. 9A, in the third modified light receiving circuit, a first group of the FET 20 as the current source circuit 2, the FET 30 as the current sensing circuit 3, the RC low pass filter (71, 72) and the FET 73 as the low pass filter 7 and the resistance element R3 60 and a second group of the PD 1 and the capacitor 5 of the input section of the TIA are turned upside down with respect to the power source and the ground. Further, a connecting direction of the third modified light receiving circuit including the FET 20, the FET 30, the RC low pass filter (71, 72), the FET 73, and the resistance elements R3 60 with respect to the power source and the ground is opposed to that of the third light receiving circuit illustrated in FIG. 9A. Except for these points, the third modified light receiving circuit has the same functions and effects as those of the third light receiving circuit illustrated in FIG. 9A.

In the exemplary circuit implementations according the first embodiment and the second embodiment, the P channel type MOSFET is used as each of the current source transistor and the current sensing transistor of the light receiving circuit, however, instead of this, other equivalent circuits can be used as the current source transistor and the current sensing transistor. The same is true on the N channel type MOSFET of the low pass filter7in the second embodiment. In the exemplary circuit implementations according the first embodiment and the second embodiment, the resistance element is used as the high impedance circuit, however, it is not limited to the resistance element, and instead of this, other equivalent circuits that function as the high impedance circuit and so on can be used. The RC low pass filter is used as the low pass filter, however, instead of this, other low pass filter that cuts off the signals in the signal band used can be used.

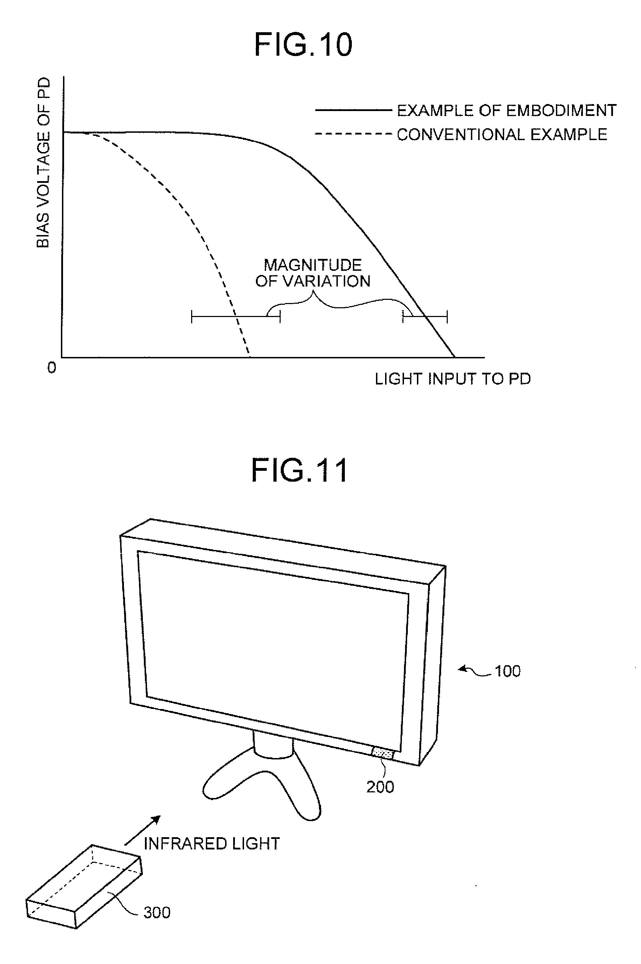

Here, regarding the characteristics of the bias voltage of the PD 1 when light is input to the PD 1, the characteristics in the circuits in the above mentioned embodiments, and an example of the characteristics in a conventional circuit are compared. FIG. 10 is an exemplary graph illustrating examples of the characteristics of the bias voltages of the PDs when light is input to the PDs in the circuits in the above mentioned embodiments and in a conventional circuit. In FIG. 10, the light input to the PD is noise light such as sunlight. In the conventional example, if the light input to the PD increases, the bias voltage of the PD rapidly decreases. Also, in the conventional example, because current is controlled by different type of elements (for example, transistor and load resistance), the conventional example has great influence caused by manufacturing variations in the elements. On the other hand, in the circuits in the above mentioned embodiments, even if the light input to the PD increases, the drop in the bias voltage of the PD is suppressed, and the circuits in the above mentioned embodiments are resistant to DC noise light. Also in the circuits in the above mentioned embodiments, because current is controlled by the same type of elements as the current source circuit 2 and the current sensing circuit 3, the circuits in the above mentioned embodiments have little influence caused by manufacturing variations in the elements, and variations in the characteristics are suppressed. As just described, if the light receiving circuit in the first embodiment and/or the second embodiment is used, it is possible to prevent the degradation in the characteristics due to variations in the elements, and a normal bias voltage can be supplied to the light receiving element.

### (Third embodiment)

Next, a television receiver comprising the above mentioned light receiving circuit according to a third embodiment is explained. FIG. 11 is an exemplary schematic view of the television receiver and a remote controller to operate the television receiver according to the third embodiment. As illustrated in FIG. 11, a remote controller 300 outputs an infrared signal to control a television receiver 100. A light receiving module 200 included in the television receiver 100 receives the infrared signal output from the remote controller 300. The above mentioned PD 1 is included in the light receiving module 200, and the PD 1 receives the infrared signal from the remote controller 300. Thus, the television receiver 100 performs a control based on the infrared signal output from the remote controller 300 according to operations performed in the remote controller 300.

Amodulation system of the infrared signal output from the remote controller 300 is the PPM (Pulse-Position Modulation) . The PPM is a system in which "1"and "0" are identified by a pulse time interval. The pulse time interval of the infrared signal output from the remote controller 300 includes codes such as turning on/off, and switching channels. Each pulse string is amplitude- modulated by subcarrier. In the embodiment, a frequency of the subcarrier is 38 kHz, but it is not limited to, and it can be other frequencies.

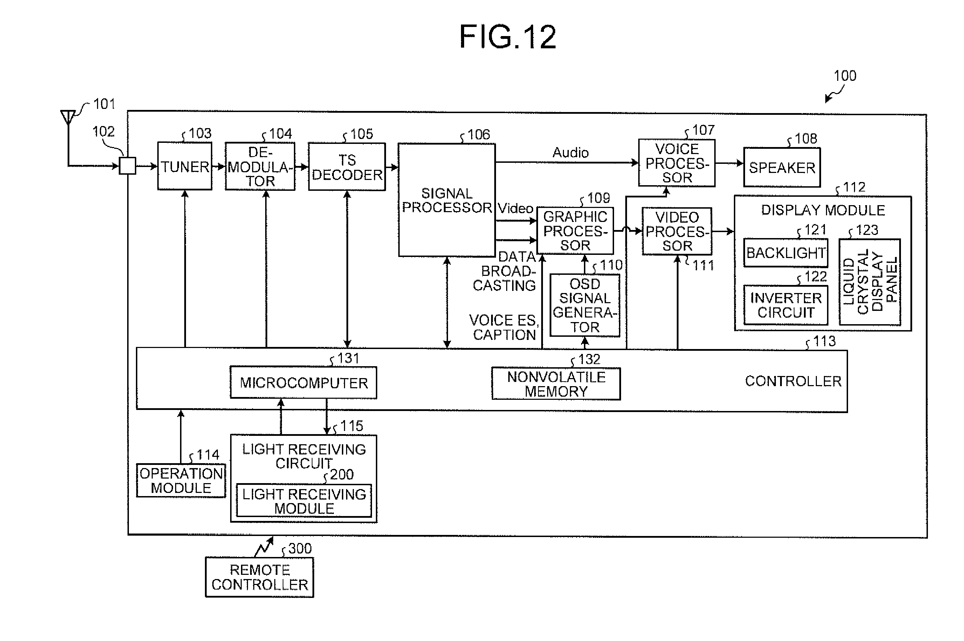

Next, a signal processing system of the television receiver 100 is explained. FIG. 12 is an exemplary block diagram of a main signal processing system of the television receiver 100 according to the embodiment. The television receiver 100 is a receiver compliant with a digital terrestrial broadcasting system.

The terrestrial digital television broadcast signal received by an antenna 101 for receiving terrestrial broadcast signal is supplied to a tuner 103 compliant with a digital terrestrial broadcasting system through an input terminal 102.

The tuner 103 selects a broadcasting signal of a desired channel based on a control signal from a controller 113 to output the selected broadcasting signal to a demodulator 104.

The demodulator 104 demodulates the broadcasting signal selected by the tuner 103 based on the control signal from the controller 113, and inputs transport stream of a desired program to output to a TS decoder 105.

The TS decoder 105 performs TS decoding processing on a transport stream (TS) multiplexed signal based on the control signal from the controller 113, and outputs the PES (Packetized Elementary Stream) obtained by depacketing a digital video signal and a digital voice signal of the desired program to a STD buffer in a signal processor 106. The TS decoder 105 outputs section information broadcasted by the terrestrial digital broadcasting signal to a section processing module in the signal processor 106.

Here, when the television is watched, the signal processor 106 performs a predetermined digital signal processing selectively on the digital video signal and the digital voice signal supplied from the TS decoder 105 to output to a graphic processor 109 and a voice processor 107.

The controller 113 includes a microcomputer 131. The microcomputer 131 controls the television receiver 100 based on a remote controller code signal output from a light receiving circuit 115. The control includes all controls such as turning on/off, switching channels, and adjusting volume of the television receiver 100 corresponding to operations performed in the remote controller 300.

The controller 113 inputs a variety of data for obtaining a program processed by a section processor in the signal processor 106, electronic program guide (EPG) information, program attribute information (program category and so on), video information, voice information, caption information and so on (service information (SI)) from the signal processor 106. The input electronic program guide (EPG) information and program attribute information (program category and so on) are stored into a nonvolatile memory 132 and updated as needed. The information stored in the nonvolatile memory is used for displaying a program table, retrieving a program, and so on.

When the controller 113 displays an EPG and a caption based on the input information, the controller 113 executes image generating processing for displaying the EPG and the caption to output image information of the EPG and caption generated to the graphic processor 109.

The section processor in the signal processor 106 outputs to the controller 113, the variety of data for obtaining a program processed by a section processor in the signal processor 106, the electronic program guide (EPG) information, the program attribute information (program category and so on), the caption information and so on (service information (SI)) from among the section information input from the TS decoder 105.

The graphic processor 109 has a function to synthesize (1) a digital video signal supplied from an AV decoder (not illustrated) in the signal processor 106, (2) an OSD (On Screen Display) signal generated by an OSD signal generator 110, (3) image data from data broadcasting, and (4) the EPG and caption information generated by the controller 113 to output to a video processor 111.

When the graphic processor 109 displays the caption from a caption broadcasting, the graphic processor 109 superimposes the caption information the video information based on the caption information obtained by the control from the controller 113.

The digital video information output from the graphic processor 109 is supplied to the video processor 111. The video processor 111 converts the input digital video signal into a video signal which can be displayed in a display module 112, and then outputs the video signal to the display module 112 so that the video corresponding to the video signal is displayed.

The display module 112 includes a backlight 121, an inverter circuit 122, and a liquid crystal display panel (LCD) 123. The LCD panel 123 displays a video corresponding to an input video signal.

The backlight 121 is a light source arranged at a rear side of the LCD panel 123, and emits light to the video displayed by the LCD panel 123 from the rear side of the LCD panel 123. The inverter circuit 122 controls driving of the backlight 121 on a predetermined drive frequency. A dimming control of the backlight 121 is performed by an on/off operation based on the drive frequency.

The voice processor 107 converts the input digital voice signal into a voice signal which can be reproduced by a speaker 108, and then outputs the converted voice signal to the speaker 108 to reproduce the voice signal.

In the television receiver 100, the controller 113 integrally controls all operations including the variety of receiving signal operations above mentioned.

For example, when the light receiving circuit 115 receives operation information output from the remote controller 300 and so on through the light receiving module 200 including the PD 1, the microcomputer 131 of the controller 113 controls the modules in the television receiver 100, respectively so that the operation (for example, a channel switching operation) corresponding to the operation information is performed.

The controller 113 is connected to an operation module 114, and receives an operation for the television receiver 100 from the operation module 114.

The television receiver 100 according to the embodiment includes the above mentioned light receiving circuit. Therefore, it is possible to eliminate an influence of noise light such as sunlight as much as possible when a user operates the remote controller 300. As the third embodiment, the television receiver 100 is exemplary explained. If arbitrary electronic device using a so-called remote controller such as a television broadcasting recording apparatus, an audio device, and other home electrical appliances includes the above mentioned light receiving circuit, the electronic device can obtain the same effects as those of the television receiver 100.

According to the embodiments above explained, it is possible to solve at least one of problems in the light receiving circuit such as the degradation in the characteristics due to variations in the elements, the degradation of the output impedance due to variations in the elements, and a normal bias voltage for the light receiving element being not be able to be supplied.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A light receiving circuit comprising:
a current source circuit (2) configured to supply direct current to a light receiving element (1);
a low pass filter (4) configured to cut off a signal in a signal band used: and
a current sensing circuit (3) which is a same kind of device as the current source circuit (2) and configured to sense input current and control the current source circuit (2) via the low pass filter (4) based on a sensed result, the current sensing circuit (3) and the current source circuit (2) constituting a current mirror circuit.

2. The light receiving circuit of Claim 1, further comprising a high impedance circuit (6) configured to increase an impedance on a side of the current sensing circuit (3) as viewed from the light receiving element (1).

3. The light receiving circuit of Claim 1 or 2, wherein
the current source circuit (2) includes a current source transistor (20),
a drain terminal of the current source transistor (20) is connected to a photodiode (1) as the light receiving element (1),
a source terminal of the current source transistor (20) is connected to one of a power source and a ground, and
a gate terminal of the current source transistor (20) is connected to the low pass filter (4).

4. The light receiving circuit of Claim 3, wherein
the current sensing circuit (3) includes a current sensing transistor (30) which is a same kind of device as the current source transistor (20),
a gate terminal of the current sensing transistor (30) is connected to the gate terminal of the current source transistor (20) via the low pass filter (4),
a source terminal of the current sensing transistor (30) is connected to one of the power source and the ground, and
a drain terminal of the current sensing transistor (30) is connected to the gate terminal of the current sensing transistor (30) and the photodiode (1).

5. The light receiving circuit of Claim 4, wherein
the current source circuit (2) further includes a third transistor (21),
a source terminal of the third transistor (21) is connected to the drain terminal of the current source transistor (20),
a drain terminal of the third transistor (21) is connected to the photodiode (1), and
a gate bias voltage is supplied to a gate terminal of third transistor (21).

6. The light receiving circuit of Claim 4 or 5, wherein
the current sensing circuit (3) further includes a resistance element (60),
one end of the resistance element (60) is connected to the drain terminal of the current sensing transistor (30),
another end of the resistance element (60) is connected to the photodiode (1),
the current source circuit (2) includes a plurality of the current source transistors (20) connected in parallel, and
number of the current source transistors (20) is n times (where n is an integer of 2 or more) larger than number of a plurality of the current sensing transistors (30).

7. The light receiving circuit of Claim 4 or 5, wherein
the current sensing circuit (3) further includes a resistance element (60),
one end of the resistance element (60) is connected to the drain terminal of the current sensing transistor (30),
another end of the resistance element (60) is connected to the photodiode (1), and
an aspect ratio W/L of the current source transistor (20) as the current source circuit (2) is n times (where n is an integer of 2 or more) larger than an aspect ratio W/L of the current sensing transistor (30).

8. A light receiving circuit comprising:
a current source circuit (2) configured to supply direct current to a light receiving element (1);
a current sensing circuit (3) which is a same kind of device as the current source circuit (2) and configured to sense input current and control the current source circuit (2) based on a sensed result, the current sensing circuit (3) and the current source circuit (2) constituting a current mirror circuit; and
a low pass filter (7) which is arranged in series between the current sensing circuit (3) and the light receiving element (1) and configured to cut off a signal in a signal band used.

9. The light receiving circuit of Claim 8, further comprising:
a high impedance circuit (6) configured to increase an impedance on a side of the current sensing circuit (3) as viewed from the light receiving element (1).

10. The light receiving circuit of Claim 8 or 9, wherein
the current source circuit (2) includes a current source transistor (20),
a drain terminal of the current source transistor (20) is connected to a photodiode (1) as the light receiving element (1),
a source terminal of the current source transistor (20) is connected to one of a power source and a ground, and
a gate terminal of the current source transistor (20) is connected to the current sensing circuit (3).

11. The light receiving circuit of Claim 10, wherein
the current sensing circuit (3) includes a current sensing transistor (30) which is a same kind of device as the current source transistor (20),
a gate terminal of the current sensing transistor (30) is connected to the gate terminal of the current source transistor (20),
a source terminal of the current sensing transistor (30) is connected to one of the power source and the ground, and
a drain terminal of the current sensing transistor (30) is connected to the gate terminal of the current sensing transistor (30) and the low pass filter (7).

12. The light receiving circuit of Claim 11, wherein
the low pass filter (7) further includes, to cut off a signal in a signal band used, a fourth transistor (73), a resistance element (71), and a capacitor (72),
a source terminal of the fourth transistor (73) is connected to the drain terminal and the gate terminal of the current sensing transistor (30),
a drain terminal of the fourth transistor (73) is connected to the photodiode (1),
and one end of the resistance element (71) is connected to the gate terminal of the fourth transistor (73),
a gate bias voltage is supplied to another end of the resistance element (71),
one end of the capacitor (72) is connected to the drain terminal of the fourth transistor (73), and
another end of the capacitor (72) is connected to the gate terminal of the fourth transistor (73).

13. The light receiving circuit of Claim 11 or 12, wherein
the current sensing circuit (3) further includes a resistance element (60) connected in series between the drain and gate terminals of the current sensing transistor (30) and the source terminal of the fourth transistor (73),
the current source circuit (2) includes a plurality of the current source transistors (20) connected in parallel, and
number of the current source transistors (20) is n times (where n is an integer of 2 or more) larger than number of a plurality of the current sensing transistors (30).

14. The light receiving circuit of Claim 12, wherein
the current sensing circuit (3) further includes a resistance element (60) connected in series between the drain terminal of the fourth transistor (73) and the one end of the capacitor (72) connected to the drain terminal of the fourth transistor (73), and the photodiode (1), and
an aspect ratio W/L of the current source transistor (20) as the current source circuit (2) is n times (where n is an integer of 2 or more) larger than an aspect ratio W/L of the current sensing transistor (30).

15. The light receiving circuit of any one of Claims 1 to 14, wherein the light receiving element (1) includes a photodiode (1).

16. An electronic device comprising:
the light receiving circuit (115) of any one of claims 1 to 15;
a light receiving element (1); and
a controller (113) configured to perform a predetermined control in response to a signal received by the light receiving element (1).
